Europäisches Patentamt

European Patent Office

Office européen des brevets

(19)

(11) Veröffentlichungsnummer: **0 121 724**
**B1**

(12) **EUROPÄISCHE PATENTSCHRIFT**

(45) Veröffentlichungstag der Patentschrift:
**13.05.87**

(51) Int. Cl.⁴: **G 07 C 5/08**

(21) Anmeldenummer: **84102091.0**

(22) Anmeldetag: **29.02.84**

(54) **Fahrtschreiber für Kraftfahrzeuge.**

(30) Priorität: **03.03.83 DE 3307523**

(43) Veröffentlichungstag der Anmeldung:
**17.10.84 Patentblatt 84/42**

(45) Bekanntmachung des Hinweises auf die Patenterteilung:
**13.05.87 Patentblatt 87/20**

(84) Benannte Vertragsstaaten:
**DE FR GB IT SE**

(56) Entgegenhaltungen:
**DE - A - 2 715 527**
**DE - A - 2 818 389**
**DE - A - 2 929 396**
**DE - A - 3 146 711**
**US - A - 4 083 052**
**US - A - 4 212 016**

(73) Patentinhaber: **Mannesmann Kienzle GmbH,
Heinrich-Hertz-Strasse, D-7730 Villingen-Schwenningen
(DE)**

(72) Erfinder: **Dold, Berthold, Landenbergerstrasse 58,
D-7230 Schramberg (DE)**
Erfinder: **Jauch, Günther, Tübinger Strasse 7,
D-7730 Villingen-Schwenningen (DE)**
Erfinder: **Mutz, Gerhard, Waldstrasse 23,
D-7734 Brigachtal (DE)**
Erfinder: **Weber, Robert, Alemannenstrasse 20,
D-7734 Brigachtal (DE)**

**Beschreibung**

Die Erfindung betrifft einen Fahrtschreiber für Kraftfahrzeuge, in welchem das Fahrzeug und den Fahrbetrieb betreffende Daten mittels einer Aufzeichnungseinrichtung nicht löschbar auf einer uhrzeitabhängig angetriebenen Diagrammscheibe aufgezeichnet werden und welche zum löschbaren Registrieren ausgewählter Daten mit einem Datenspeicher ausgestattet ist, welchem ein die Dateneingabe steuernder Mikroprozessor zugeordnet ist.

Die bekannten Fahrtschreiber dienen dazu, Messwerte, wie beispielsweise die Geschwindigkeit, den zurückgelegten Weg, die Motordrehzahl, den Kraftstoffverbrauch usw. in analoger Form auf einer relativ langsam, vorzugsweise uhrzeitabhängig angetriebenen Diagrammscheibe aufzuzeichnen. Abgesehen von den erwähnten Messwerten, wie Geschwindigkeit, Weg usw. werden Fahr- bzw. Lenkzeiten, Haltezeiten und Pausenzeiten aufgezeichnet, die ausser der Beurteilung der Fahrzeugauslastung auch für die Arbeitszeitermittlung des bzw. der Fahrer herangezogen werden. Für die Auswertung der Fahrtschreiberdiagramme gibt es Auswerteanlagen, in denen insbesondere die letzteren Daten, also die Zeit- und Wegdaten sowie die Kraftstoffverbrauchswerte ausgewertet werden können. Hierzu werden die Diagrammscheiben in eine Lesevorrichtung eingeführt, in der die Aufzeichnungen mit optischen Mitteln abgetastet werden. Der Computer der Auswerteanlage summiert die Auswerteergebnisse und steuert den Ausdruck auf ein Formular.

Die genannten Auswerteanlagen sind relativ kostenaufwendig und ihre Anschaffung lohnt sich nur, wenn bei einem bestimmten Betrieb eine relativ grosse Anzahl von Fahrzeugen überwacht wird. Man hat aber bereits Dienstleistungszentren geschaffen, in denen die Vielzahl der jeden Tag anfallenden Diagrammscheiben auch grösserer Fuhrparks ausgewertet und listenmässig zusammengestellt werden können.

Die Aufbewahrung der Vielzahl der bei dieser Art Datenerfassung zu sammelnden und aufzubewahrenden Diagrammscheiben bereitet jedoch nicht unerhebliche Probleme. Auch ist es mit den bekannten Auswerteanlagen nicht möglich, den nicht unwesentlichen Messwert «Geschwindigkeit» automatisch auszuwerten, da es sich hier um ein für eine elektrooptische Auswertung nicht geeignetes Liniendiagramm mit stark wechselnder Charakteristik handelt. Es besteht daher schon seit langem ein Bedürfnis dafür, Fahrtschreiberdaten möglichst so zu ermitteln, dass auch mit den bisherigen Auswerteanlagen nicht auswertbare Aufzeichnungen, beispielsweise der Geschwindigkeit oder der Drehzahl, dem Fahrtschreiber in einer möglicherweise über einen grösseren Zeitraum als die Laufdauer einer Diagrammscheibe komprimierten Form entnommen werden können. Eine weitere wesentliche Forderung bestand darin, auch bestimmte Ereignisse betreffende Daten nach Möglichkeit in einer anderen Aufzeichnungsform zu liefern, als dies mit den üblichen Aufzeichnungsmitteln des Fahrtschreibers möglich ist. Ein solches Ereignis wäre z.B. ein Unfall, für dessen Beurteilung es wesentlich ist, dass die Geschwindigkeitswerte der letzten 200 m bis 300 m hochaufgelöst dargestellt werden.

Das Ziel der Erfindung ist es demnach, einen Fahrtschreiber so zu ergänzen, dass er sowohl über einen längeren Zeitraum von beispielsweise einer Woche komprimierte bzw. kumulierte Werte und auch bestimmte Ereignisse betreffende Daten in einer Form liefert, die den Charakter eines Dokumentes hat, das einerseits «zu den Akten genommen» werden kann, das andererseits aber auch hinsichtlich der Art seiner Aufzeichnungen dafür geeignet ist, mit den bekannten elektrooptisch arbeitenden Auswerteeinrichtungen ausgewertet zu werden.

Aus der DE-B-1 112 848 ist bereits ein Fahrtschreiber bekannt, in dem ausser dem normalen Aufzeichnungsträger in Form der Diagrammscheibe, der die Geschwindigkeits- und Wegdaten von 24 h aufnimmt, auch ein zusätzlicher, mit einer Kassette einsetzbarer Aufzeichnungsträger vorgesehen ist, der die Geschwindigkeitsdaten über dem zurückgelegten Weg für die letzten 200 m bis 300 m aufzeichnet. Diese Anordnung erlaubt es zwar, mit einem Fahrtschreiber mit der üblichen Registrierdauer von 24 h zusätzlich auf einen Aufzeichnungsträger zu registrieren, der eine für eine Unfallauswertung erforderliche höhere Auflösung bietet. Zwar kann man den zusätzlichen Aufzeichnungsträger mit seiner Kassette entnehmen, es ist jedoch nicht möglich, die erzeugten Aufzeichnungen mit den genannten elektrooptischen Auswerteanlagen auszuwerten. Um die Aufzeichnungen archivieren zu können, ist es notwendig, den Aufzeichnungsträger zu fotografieren, was schon deswegen mit Schwierigkeiten verbunden ist, weil dann mehrere Fotografien angefertigt und aneinandergereiht werden müssen. Die Tatsache, dass der Aufzeichnungsträger mit seiner Kassette aus dem Gerät entnehmbar ist, ist also — abgesehen davon, dass für das Anordnen der Kassette im Fahrtschreiber relativ viel Raum erforderlich ist — für seine Funktionstüchtigkeit nur bedingt als eine Verbesserung anzusehen.

Darüber hinaus ist es aus der DE-A-2 929 168 bekannt, Fahrtdaten, wie beispielsweise die Geschwindigkeit, in einem Halbleiterspeicher, einem FIFO-Speicher in Form eines Schieberegisters, löschbar zu speichern. Auch hier ist vorgesehen, dass diese in den Halbleiterspeicher eingeschriebenen Geschwindigkeitsmesswerte der letzten 200 m bis 300 m dadurch ausgewertet werden, dass der Speicher dem Gerät entnommen und die Aufzeichnungen in einer elektronischen Auswerteeinheit in eine Form gebracht werden, die als Dokument anzusehen ist. Es wird also ein besonderes Auswertegerät benötigt, um die Werte des FIFO-Speichers herauszuschreiben und als Dokument zu den Akten nehmen zu können.

Aus der DE-A-2 907 679 ist ausserdem bereits eine Datenerfassungsanordnung für Kraftfahrzeuge bekannt, die aus einem im Kraftfahrzeug anzuordnenden Datenerfassungsgerät besteht, mittels dessen die Werte von im Fahrzeug angeordneten Messwertgebern über eine elektronische Speichereinheit erfasst und mit Hilfe eines Magnetbanddatenträgers aufgezeichnet werden. Über eine Abfrageeinheit können die Daten aus dem Erfassungsgerät auf einen zweiten Magnetbanddatenträger übertragen wer-

den, dessen Werte dann in einem Computer ausgelesen werden. Dieses Datenerfassungsgerät dient wohl dazu, kumulierte Daten über den Betrieb des Kraftfahrzeuges und die Fahrweise des Fahrers an einen Rechner zu liefern. Hierbei handelt es sich jedoch um ein Gerät, welches nicht unmittelbar im Fahrzeug visuell lesbare Daten erzeugt, wie dies bei einem Fahrtschreiber der Fall ist.

Mit der DE-A-2 929 396 ist ferner bekannt geworden, in einem Fahrtschreiber ein Schieberegister oder einen anderen, hierfür geeigneten elektronischen Speicher zur fortlaufenden Speicherung von für eine Unfallanalyse relevante Daten vorzusehen und diesem einen Mikroprozessor zuzuordnen, der die Dateneingabe geschwindigkeitsabhägig steuert, d.h. bei Stillstand des Fahrzeuges die Dateneingabe unterbricht. Auch in diesem Falle erfolgt die Auswertung des Speicherinhaltes ausserhalb des Fahrtschreibers in einem mikroprozessorgesteuerten Auswertegerät.

Die Lösung der bereits gestellten Aufgabe sieht vor, dass mit Hilfe des Mikroprozessors errechnete Datensummen und/oder programmgemäss ausgewählte Ereignisdaten während eines mehrfachen des für die uhrzeitabhängig angetriebene Diagrammscheibe vorgesehenen Zeiabschnitts im Datenspeicher gespeichert werden, dass der Diagrammscheibenantrieb zur Registrierung der gespeicherten Daten durch dieselbe der uhrzeitabhängigen Registrierung dienende Aufzeichnungseinrichtung von der üblichen Drehzahl 1/24 h auf eine wesentlich höhere Drehzahl umschaltbar ist und dass die für die uhrzeitabhängige Registrierung übliche Diagrammscheibe ausgetauscht ist gegen eine besondere Datendiagrammscheibe.

Die Erfindung lässt sich besonders einfach realisieren bei einem Fahrtschreiber, der ohnehin schon mit einem mikroprozessorgesteuerten Messwerk ausgerüstet ist. Bei derartigen Fahrtschreibern werden die wegabhängig erzeugten Impulse mit von einem Zeitgeber erzeugten Impulsen im Sinne der Errechnung eines digitalen Geschwindigkeitswertes mit Hilfe eines Mikroprozessors verrechnet, wobei die jeweils neu gewonnenen Messwerte als Soll-Werte vorgegeben und mit der Position beispielsweise eines schrittmotorisch angetriebenen Schreibstiftes oder eines aktivierten Elementes einer statischen Registrieranordnung, z.B. eines Thermodruckkopfes oder eines Elektrodenkammes, als Ist-Wert verglichen werden. Der, um bei diesem Beispiel zu bleiben, den Schreibstift antreibende Schrittmotor wird bekanntlich bei diesen Vergleichen jeweils um so viele Schritte in Plus- oder Minusrichtung verstellt, wie es der Differenz zwischen dem Ist-Wert (Stellung des Schreibstiftes) und dem Soll-Wert (mit Hilfe des Mikroprozessors neu ermittelter Geschwindigkeitswert) entspricht. Ein solcher Fahrtschreiber ist vorzugsweise mit lediglich einem zweiten, ebenfalls von einem Schrittmotor angetriebenen Schreibstift ausgerüstet, welcher der Aufzeichnung von Fahr-, Halte- und Pausenzeiten sowie der zurückgelegten Wege in mehreren Diagrammspuren dient. Dieser zweite Schreibstift wird im vom Aufzeichnungsträger abgehobenen Zustand über dem Aufzeichnungsträger, und zwar quer zu dessen Transportrichtung hin- und zurückbewegt und mikroprozessorgesteuert jeweils dann abgesenkt, wenn in einer der Diagrammspuren eine Aufzeichnung in Form eines Strichelementes erfolgen soll.

Der bereits vorhandene Mikroprozessor kann nun ohne weiteres auch dazu herangezogen werden, weitere entweder kumulative Daten oder bestimmte Ereignisse betreffende Daten zu ermitteln. Hierfür wird der Mikroprozessor mit einem Halbleiterspeicher in Form eines RAM zusammengeschaltet, in welchem sämtliche vom Mikroprozessor ermittelten Daten, auch die, die der Steuerung des dem Geschwindigkeitsschreibstift zugeordneten Schrittmotors dienen und die, was bei Fahrtschreibern im allgemeinen eine selbstverständliche Leistung darstellt, das Aufzeichnen von Weg- und Arbeitszeitdiagrammen ermöglichen, eingeschrieben werden. Dabei ist die Speicherkapazität für das den Mikroprozessor steuernde Systemprogramm so auszulegen, dass die zusätzliche Ermittlung der Summendaten und/oder Ereignisdaten gewährleistet ist. Zusätzlich sollte die Möglichkeit bestehen, konstante Daten, beispielsweise Fahrzeug- und Fahrernummern, Motorkenndaten und dgl. zu speichern und somit abfragbar zu machen.

Erfindungsgemäss ist nun der uhrzeitabhängige, 1 Umdrehung/24 h betragende Transport der üblichen als Aufzeichnungsträger dienenden Diagrammscheiben durch ein geeignetes Signal auf eine grössere Transportgeschwindigkeit, beispielsweise 1 Umdrehung/10 Min., mit der eine besondere, ausschliesslich der Entnahme der Summen- und Ereignisdaten dienende Diagrammscheibe angetrieben wird, umschaltbar. Realisiert wird dieser zweistufige Diagrammscheibentransport vorzugsweise ebenfalls mit einem Schrittmotor, der mit unterschiedlichen Impulsfrequenzen gesteuert wird.

Der erfindungsgemässe Fahrtschreiber bzw. das vorgeschlagene Datenerfassungssystem löst die gestellte Aufgabe zufriedenstellend und ermöglicht es, einerseits die üblichen und gesetzlich geforderten, analogen Aufzeichnungen zu liefern, andererseits eine Auswertung, wenigstens jedoch eine zeitliche und mengenmässige Raffung von Fahrtdaten vorzunehmen und hierüber einen Beleg zu erstellen, auf dem diese in der Regel über einen Zeitraum von mehreren Tagen, insbesondere einer Woche, kumulierten Daten vorzugsweise in digitaler oder auch visuell lesbarer Form aufgezeichnet sind. Von besonderem Vorteil ist dabei, dass dieser Beleg eine übliche, in bekannter Weise handhabbare und mit vorhandenen Auswerteeinrichtungen weiter auswertbare Diagrammscheibe darstellt, die ohne zusätzlichen konstruktiven Aufwand in dem betreffenden Fahrtschreiber auch zusätzlich zu einer mit 1 U/24 h umlaufenden Diagrammscheibe verwendbar ist und dass sowohl auf der uhrzeitabhängig umlaufenden Diagrammscheibe als auch auf der Datendiagrammscheibe ein und dieselben Aufzeichnungsmittel wirksam sind. Mit einem in der erfindungsgemässen Weise ausgerüsteten Fahrtschreiber sind somit die betriebssynchron erstellten, den Fahrtverlauf kennzeichnenden, analogen Aufzeichnungen von den Aufzeichnungen kumulierter und zeitgeraffter Daten räumlich trennbar, d.h. die zusätzliche Daten-

diagrammscheibe stellt ein jederzeit erstellbares, übersichtliches und unabhängig vom Fahrtschreiber weiterverarbeitbares Fuhrparkkontrollmittel dar, lässt sich, abgesehen davon, dass auch eine Analogdarstellung des Geschwindigkeitsverlaufes über dem zuletzt gefahrenen Weg verwirklicht werden kann, beispielsweise auch lediglich als reiner Arbeitszeitbeleg erstellen.

In den beiliegenden Zeichnungen wird ein Ausführungsbeispiel der Erfindung, zu dem zahlreiche Varianten denkbar sind, näher erläutert.

Die Zeichnungen zeigen mit

Fig. 1 einen Fahrtschreiber in im Armaturenbrett eines Kraftfahrzeuges eingebauten Zustand,

Fig. 2 eine perspektivische Darstellung eines Fahrtschreibers mit geöffnetem Deckel,

Fig. 3 eine Prinzipdarstellung einer dem Aufzeichnen von Mengen-, Weg- und Zeitdaten dienenden Aufzeichnungseinrichtung,

Fig. 4 ein Übersichtsschaltbild der Hardware für die Steuerung der Schreibstifte,

Fig. 5 eine gemäss der Erfindung zusätzlich verwendete Datendiagrammscheibe mit Aufzeichnungen kumulierter Daten,

Fig. 6 ein auf der Datendiagrammscheibe aufgezeichnetes «Unfalldiagramm».

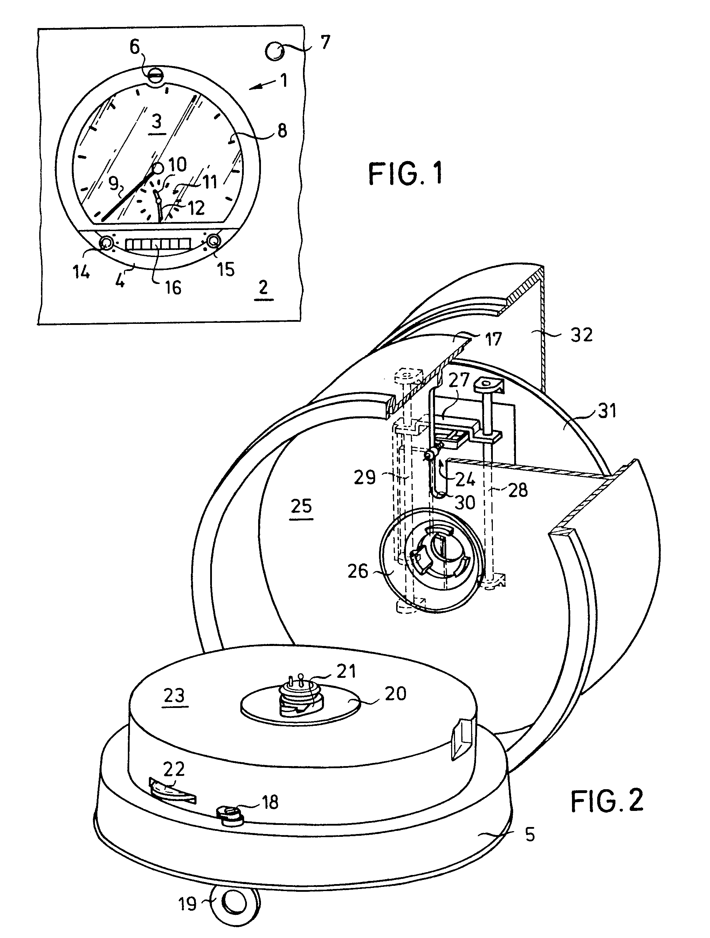

Ein Fahrtschreiber 1 ist, wie Fig. 1 zeigt, in einem Armaturenbrett 2 eingebaut. Das Zifferblatt 3 des Fahrtschreibers 1 wird von einem Frontring 4 umschlossen, und ein Schloss 6 dient dem Verschliessen des schwenkbaren Deckels 5. Das Zifferblatt 3 zeigt Geschwindigkeitsmarkierungen 8, denen ein Zeiger 9 zugeordnet ist. Mit Hilfe der beiden Zeiger 10 und 12 und der Zeitskala 11 wird die aktuelle Tageszeit angezeigt. Zwei verstellbare Knöpfe 14 und 15 dienen einer Fahrzeugbesatzung der Vorwahl der aufzuzeichnenden Fahr-, Pausen- und Ruhezeiten. Mit 16 ist ein im Fahrtschreiber 1 üblicher Wegzähler bezeichnet. Im Armaturenbrett ist bei der in Frage stehenden Art des Gerätes ein Auslösesignalgeber 7 angeordnet, mit dessen Hilfe der Schnellgang für eine besondere Datendiagrammscheibe ausgelöst werden kann. Die Anordnung des Auslösesignalgebers 7 im Armaturenbrett und nicht im Fahrtschreiber selbst wurde deswegen gewählt, um eine Fehlbedienung nach Möglichkeit auszuschliessen, also zu vermeiden, dass beim Normalbetrieb des Fahrtschreibers der Auslösesignalgeber betätigt wird. Die Betätigung des Auslösesignalgebers 7 kann auch mittels eines Schlosses erfolgen. Dadurch wird nur autorisierten Personen die Möglichkeit eingeräumt, mit einer besonderen Datendiagrammscheibe die im Fahrtschreiber gespeicherten, kumulierten Daten abzufragen.

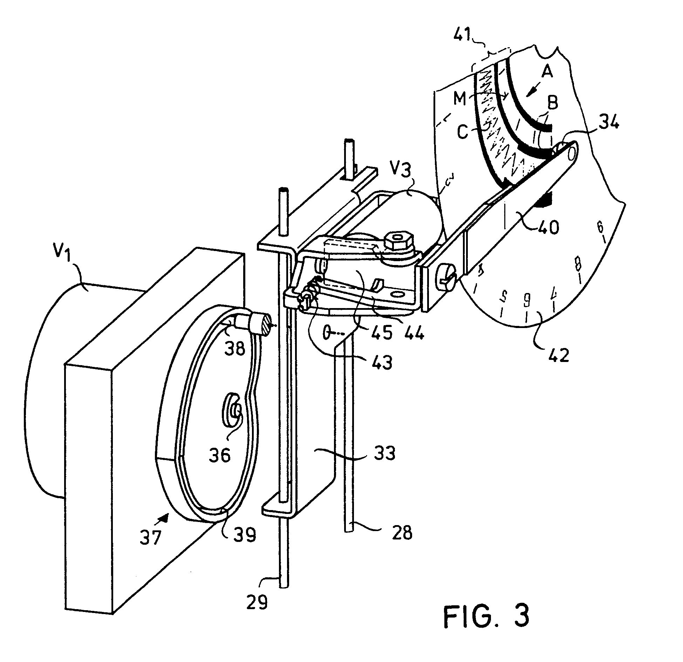

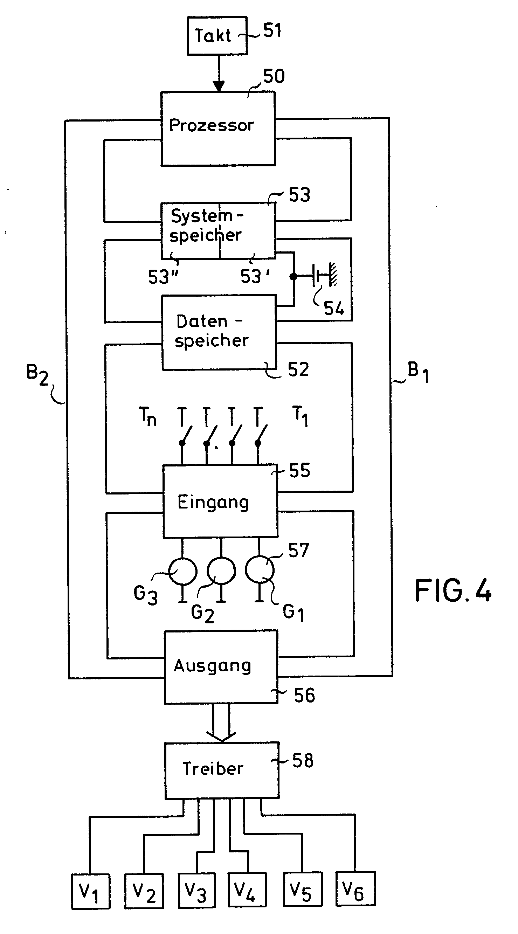

Wie ferner aus Fig. 2 hervorgeht, besitzt der Fahrtschreiber 1 ein Gehäuse 17, an dem der Deckel 5 mittels eines Scharniers angelenkt ist und mit dem der Deckel 5 mittels eines Schlossriegels 18 und eines Schlüssels 19 verschlossen werden kann. Im Deckel 5 ist eine Diagrammauflage 20 angeordnet, die von einem Schrittmotor (z.B. $V_5$ Fig. 4) im Normalbetrieb uhrzeitabhängig, d.h. mit relativ langsamer Geschwindigkeit so angetrieben wird, dass die Diagrammauflage 20 in 24 h eine Umdrehung macht. Die Diagrammauflage 20 ist mit einem unrunden Aufnahmezapfen 21 versehen. Dementsprechend weisen die verwendeten Diagrammscheiben 42 (Fig. 3) ein gemäss der Kontur des Aufnahmezapfens 21 geformtes Aufnahmeloch auf. Ein Rändelrad 22 dient dem Richten der Zeitzeiger 10 und 12, während mit 23 das topfförmige, als Schreibunterlage dienende Gehäuse des Deckels 5 bezeichnet ist, in welchem im wesentlichen der Schrittmotor und diesem zugeordnete Getriebeteile für den Antrieb der Diagrammscheibenauflage 20 und der Uhrzeitanzeigemittel 10, 12, die Welle des Geschwindigkeitszeigers sowie das Zifferblatt und diesem zugeordnete Beleuchtungsmittel angeordnet sind.

Die federnd gelagerten Schreibstifte, von denen in Fig. 2 nur einer — 24 — gezeigt ist, sind mit den dazugehörigen Messwerken hinter einer Abdeckplatte 25 angeordnet. In dieser Abdeckplatte 25 ist eine im geöffneten Zustand des Deckels 5 lose drehbar gehaltene Spannglocke 26 angeordnet, die beim Schliessen des Deckels 5 automatisch auf den Aufnahmezapfen 21 aufrastet und eine auf der Diagrammscheibenauflage 20 liegende Diagrammscheibe 42 festklemmt. Der Schreibstift 24 ist in der üblichen Weise mittels eines Schlittens 27 auf zwei Führungsstangen 28 und 29, die ihrerseits auf einer in den Fahrtschreiber 1 einsetzbaren Montageplatte 31 befestigt sind, in radialer Richtung verschiebbar angeordnet und ragt zusammen mit einem oder mehreren weiteren Schreibstiften, die im allgemeinen ebenfalls auf auf den Führungsstangen 28, 29 gelagerten Schlitten angeordnet sind, durch einen Schlitz 30 in der Abdeckplatte 25 hindurch. Der Übersichtlichkeit halber sind die zwischen der Montageplatte 31 und einer den Fahrtschreiber 1 rückseitig abschliessenden Haube 32 befindlichen Messwerke, insbesondere für die Geschwindigkeit und die Drehzahl, sowie die zugehörigen Antriebsmittel, wie beispielsweise ein dem die Geschwindigkeit aufzeichnender Schreibstift 24 zugeordneter Schrittmotor $V_2$ (Fig. 4), in Fig. 2 nicht gezeigt.

Die Fig. 3 zeigt im Prinzip eine Aufzeichnungseinrichtung, mit der beispielsweise Zeit-, Weg- und Mengendaten in mehreren getretten Spuren auf der Diagrammscheibe 42 aufgezeichnet werden können. In einer geeigneten konstruktiven Anpassung an die baulichen Gegebenheiten in einem Fahrtschreiber gemäss Fig. 2 ist hierfür ein weiterer Schreibstift 34 vorgesehen, welcher durch den in der Abdeckplatte 25 befindlichen Schlitz 24 hindurchgreift und welcher ebenfalls auf einem auf den Führungsstangen 28 und 29 verschiebbar gelagerten Schlitten 33 angeordnet ist. Der Antrieb des Schlittens 33 erfolgt, ausgehend von einem Schrittmotor $V_1$, über eine Welle 36 und eine Herzkurvenscheibe 37, in deren Führungsnut 39 ein an dem Schlitten 33 befestigter Stift 38 eingreift. Auf diese Weise wird bei jeder Umdrehung der Herzkurvenscheibe 37 eine Hin- und Rückbewegung des an einem Schreibhebel 40 angeordneten Schreibstiftes 34 über dem sämtliche Aufzeichnungsspuren umfassenden Aufzeichnungsfeld 41 der Diagrammscheibe 42 erzeugt. Falls kein Aufzeichnungsbefehl vorliegt, ist der Schreibstift 34 während dieser Hin- und Rückbewegung von der Diagrammscheibe 42 abgehoben. Dies bewirkt eine Feder 43, die an einem am Klappanker 45 eines

Elektromagneten $V_3$ ausgebildeten Arm 44, mit dem der Schreibhebel 40 fest verbunden ist, angreift. Der Schreibstift wird somit über dem Aufzeichnungsfeld 31 hin und zurück bewegt und mittels des Elektromagneten $V_3$ jedesmal, um einen Aufzeichnungsstrich zu erzeugen, dann abgesenkt, wenn ein entsprechender Befehl hierzu vorliegt.

Die Gesamtheit der dabei entstehenden Aufzeichnungen ist in Fig. 3 mit A bezeichnet. Es handelt sich dabei um mehrere, teils schmälere, teils breitere Balkendiagramme B, um ein Zick-Zack-Diagramm C und um ein Strichdiagramm M, welches beispielsweise den Kraftstoffverbrauch darstellt, wobei jeder Strich einen Durchfluss von 5 l bedeuten kann. Die Balkendiagramme B repräsentieren die verschiedensten Zeiten, während das Zick-Zack-Diagramm C den vom Fahrzeug zurückgelegten Weg darstellt. Im allgemeinen ist der Aufzeichnungsmassstab des Zick-Zack-Diagramms C derart gewählt, dass zwischen zwei Maxima vom Fahrzeug 10 km zurückgelegt worden sind. Die Breite der Balkendiagramme B ist ein Merkmal für die verschiedenen Arbeitsarten, z.B. Lenkzeit, Pause, Ruhezeit, deren Einstellung von den Fahrern über die Stellknöpfe 14 und 15 vorgenommen wird.

Bei den im Normalbetrieb, d.h. mit uhrzeitabhängigem Diagrammscheibenantrieb erzeugten Aufzeichnungen lassen sich die Zeiten an der am Aussenrand der Diagrammscheibe 42 aufgedruckten, einen Aufzeichnungsbereich von 0 bis 24 Uhr umfassenden Zeitskala ablesen. Selbstverständlich kann auch eine besondere Datendiagrammscheibe, die im Schnellgang beispielsweise in 10 Min. beschrieben wird, mit einer dem gewählten Aufzeichnungsbereich entsprechenden, den aufzuzeichnenden Daten angepassten Skala visuell ablesbar gemacht werden. Auch eine Blankoscheibe ist als Datendiagrammscheibe denkbar, die beispielsweise nach Umschaltung auf den geänderten Messbereich in der bekannten elektro-optischen Auswerteeinrichtung gemäss dem franz. Patent 72 05 807 ausgewertet werden könnte, wobei die gewünschte Kumulierung der Daten mit Hilfe der in Fig. 4 gezeigten Elektronik vorgenommen worden ist.

Diese Elektronik umfasst einen Mikroprozessor 50, einen quarzgesteuerten Taktgeber 51, einen Datenspeicher 52, beispielsweise ein RAM, und einen das Systemprogramm enthaltenden Systemspeicher 53, beispielsweise ein EPROM. Die Daten in den beiden Speichern 53 und 52 werden über eine Batterie 54 gehalten, so dass auch bei abgeschalteter Fahrzeugbatterie die Datenentnahme gesichert ist. Die Dateneingabe erfolgt über Eingangsports 55, die Ausgabe über Ausgangsports 56. Die Baugruppen 50, 53, 52, 55 und 56 sind über je einen Adressbus $B_1$ und einen Datenbus $B_2$ miteinander verbunden, so dass Daten entsprechend der Programmvorgabe durch den Systemspeicher 53 ausgetauscht werden können. An die Eingangsports 55 sind verschiedene dynamische Geber 57 angeschlossen, wie beispielsweise ein Weggeber $G_1$, ein Drehzahlgeber $G_2$ und ein Geber $G_3$, der mit einem Kraftstoffdurchflussmesser verbunden ist und nach jeweils 5 l verbrauchten Kraftstoffes einen Impuls liefert. Andererseits sind an die Eingangsports 55 auch verschiedene statische, Ja-Nein-Aussagen liefernde Geber $T_1$ bis $T_n$ angeschlossen. Diese repräsentieren z.B. die Stellknöpfe 14 und 15 und den Auslösesignalgeber 7. Ausserdem sind als statische Geber beispielsweise ein Bremsbetätigungsschalter, ein Fernlicht- oder Warnsignalschalter oder ein Schalter, der ein von der Stärke eines Bremsbelages abhängiges Signal liefert, usw. vorgesehen. Grundsätzlich wird es zweckmässig sein, eine grössere Anzahl von Eingangsports für beliebige statische Geber $T_1$ bis $T_n$ vorzusehen, um die Möglichkeit zu haben, die verschiedensten Fahrzeugdaten verarbeiten zu können, wobei es dann dem Anwender überlassen bleibt, welche Signale er auf die einzelnen Eingangsports 55 legen will. Dies ist umso wichtiger deswegen, weil im vorhinein nicht festgelegt werden kann, für welche Art von Fahrzeugen ein derart ausgerüsteter Fahrtschreiber eingesetzt wird. Hinsichtlich eines Strassenkehrfahrzeuges ist es beispielsweise interessant, Daten über den Einsatz der Kehrwalzen zu erhalten. Bei einem Milchsammelfahrzeug oder Tankfahrzeug sind die Durchflusswerte von Benzin- und Milchmengen wesentlich wichtiger als den eigentlichen Fahrbetrieb betreffende Daten.

Die Ausgangsports 56 sind über einen Treiberbaustein 58 an verschiedene Ausgabemittel $V_1$ bis $V_6$ angeschlossen. Mit $V_1$ und $V_2$ sind beispielsweise die Schrittmotore für den Antrieb der beiden Schreibstifte 24 und 34 quer zur Aufzeichnungsebene bezeichnet, während der Elektromagnet $V_3$ den Schreibstift 34 senkrecht zur Diagrammscheibe 42 bewegt. Sollen auch die Motordrehzahlen erfasst werden, so muss man einen weiteren Schreibstift vorsehen, der beispielsweise über einen Schrittmotor $V_4$ angetrieben werden würde. Der Schrittmotor $V_5$ oder ein anderes Antriebsmittel soll beispielsweise dem Antrieb der Diagrammscheiben 42 dienen und wahlweise je nach Steuerung durch das Systemprogramm 53 und den Prozessor 50 mit einer langsamen Impulsfolge oder einer schnelleren Impulsfolge steuerbar sein. Andere Ausgabemittel, beispielsweise $V_6$ usw., können angeschlossen werden, wenn zusätzliche Schreibstifte betätigt werden sollen.

In dem Systemspeicher 53 ist in einem Teil 53' das Programm für den uhrzeitabhängigen Normalbetrieb des Fahrtschreibers gespeichert, in einem weiteren Teil 53'' der Programmteil für den Schnellgang. Ob im Schnellgang nun die Aufzeichnung der Geschwindigkeits-, Drehzahl- und Wegwerte der letzten 200 m bis 300 m erfolgt, also ob es sich um ein Programm für einen sog. Unfallschreiber handelt, oder ob im Schnellgang kumulierte Daten beispielsweise der zurückliegenden Woche aufgezeichnet werden, kann, solange hier keine gesetzlichen Vorschriften bestehen, der Wahl des Fahrzeughalters überlassen bleiben. Bei entsprechend gross ausgelegtem Systemprogramm ist es selbstverständlich auch möglich, beide Arten von Sonderprogrammen in dem Systemspeicher 53 vorzusehen und einen zusätzlichen Datenspeicher anzubringen, um beide Arten von Daten zu speichern. Kostenmässig wird dies sich aber in der Regel verbieten.

Im folgenden sei die Funktionsweise des Anmeldungsgegenstandes in einer gerafften Darstellung beschrieben. Der Fahrtschreiber 1, wie er in den Fig.

1 bis 4 dargestellt ist, ist an mehrere dynamische Geber $G_1$ bis $G_3$ und an statische Geber für Ja-Nein-Aussagen $T_1$ bis $T_n$ angeschlossen. Durch den Systemspeicher 53 werden die Geber $G_1$ bis $G_3$ in regelmässigen Abständen abgefragt und anstehende Eingangssignale dem Prozessor 50 gemeldet, um dort in einer vom Systemspeicher 53 vorgegebenen Art und Weise be- bzw. verarbeitet und im internen Speicher des Prozessors 50 zunächst vorläufig abgelegt zu werden. Zur Datenverarbeitung gehört beispielsweise die Verrechnung der einzelnen Impulse des Weggebers $G_1$ mit bestimmten Konstanten, beispielsweise der Wegdrehzahl des Fahrzeuges und dem Messbereich des Fahrtschreibers, sowie mit den vom Taktgeber 51 gelieferten Zeitimpulsen, so dass ein im Prozessor 50 abgelegter Wert bereits eine unmittelbare, digitale Aussage über die Anzahl der vom Schrittmotor $V_2$ für die Aufzeichnung eines bestimmten Geschwindigkeitswertes erforderlichen Schritte darstellt. Ferner vergleicht der Prozessor 50 den ermittelten Sollgeschwindigkeitswert mit dem Ist-Geschwindigkeitswert, d.h. der jeweiligen Stellung des Geschwindigkeitsschreibers 24, und steuert entsprechend einer positiven oder negativen Geschwindigkeitsänderung den Schrittmotor $V_2$ rechtslaufend oder linkslaufend und bewirkt das Nachführen des Geschwindigkeitszeigers 9 sowie das Aufzeichnen eines Geschwindigkeitsdiagramms in analoger Form.

In ähnlicher Weise werden auch die Drehzahldaten verarbeitet, wenn es sich um einen Fahrtschreiber handelt, der mit den entsprechenden Anzeige- und/oder Aufzeichnungsmitteln ausgerüstet ist.

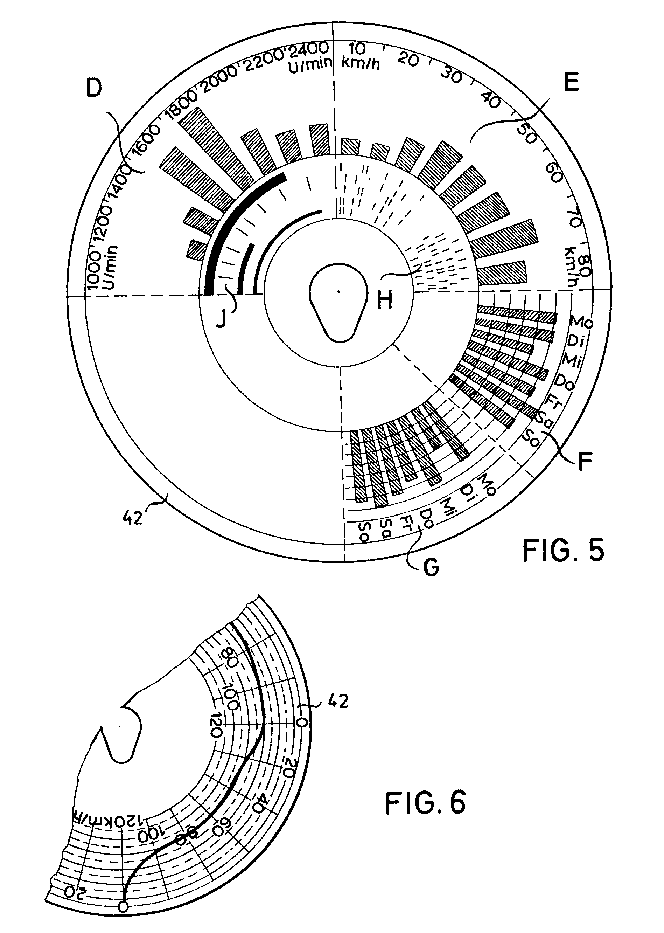

Es sei an dieser Stelle vermerkt, dass für den Normalbetrieb des Fahrtschreibers, welcher ein kontinuierlicher Vorgang ist, bei dem nie grössere Datenmengen gespeichert werden müssen, der Datenspeicher 52 nicht erforderlich ist. Vielmehr ist der interne Speicher des Prozessors 50 ausreichend, die Daten so lange zwischenzuspeichern, bis ihre Aufzeichnung durch die Schreibstifte 24 und 34 erfolgt ist. Lediglich für die Zwecke der Kumulierung der Daten bzw. für die Zwecke der «Letztwegerfassung» ist das Gerät mit dem zusätzlichen Datenspeicher 52 versehen. Sieht das Systemprogramm beispielsweise die Aufzeichnung kumulierter Daten vor, so wird während des Fahrbetriebes beispielsweise zur Erzeugung eines Geschwindigkeits- oder Drehzahlprofils jeder ermittelte Geschwindigkeits- oder Drehzahlwert mit vordefinierten Geschwindigkeitsbereichen verglichen und dann dem passenden Bereich zugeordnet, in dem der entsprechende Zähler im Datenspeicher 52 um «1» erhöht wird. Die Fig. 5 zeigt eine Datendiagrammscheibe 42, auf die im Schnellablauf Daten aus dem Datenspeicher 52 aufgezeichnet worden sind. Man erkennt in Feld D ein Drehzahlprofil und im Feld E ein Geschwindigkeitsprofil. Die Fläche der einzelnen Blöcke 1000 U/min, 1200 U/min, 1400 U/min, 1600 U/min usw. entspricht den Zeiten, die das Kraftfahrzeug jeweils während dieser Woche in den genannten Drehzahlbereichen gefahren ist. Genauso verhält es sich mit dem Geschwindigkeitsprofil. Man erkennt beispielsweise, dass das Fahrzeug überwiegend in den Geschwindigkeitsbereichen 60 km/h bis 80 km/h gefahren ist und nur relativ wenig in den unteren Geschwindigkeitsbereichen 20 km/h und 40 km/h. Es handelt sich dabei also um ein Fahrzeug, welches überwiegend im Überlandverkehr eingesetzt ist. Würde es sich dagegen um ein Fahrzeug handeln, was beispielsweise im städtischen Linienverkehr eingesetzt wäre, dann würden die Maxima des Geschwindigkeitsprofils im unteren Geschwindigkeitsbereich liegen. In den Feldern F und G sind Wegprofile, und zwar jeweils für die einzelnen Wochentage, aufgezeichnet, ausserdem Kraftstoffverbrauchsprofile unter der Voraussetzung, dass an den Eingang $G_3$ ein Kraftstoffverbrauchsmesser angeschlossen ist. Die Länge der Balken im Aufzeichnungsfeld F repräsentiert jeweils die Zahl der km, die an diesem Tage zurückgelegt worden sind, die Länge des Balkens im Feld G repräsentiert den Kraftstoffverbrauch an dem gleichen Tage.

Es ist wesentlich, nochmals zu erwähnen, dass eine Aufzeichnung eines Geschwindigkeits- und Drehzahlprofils gemäss Fig. 5 mit dem gleichen Schreibstift 24 erfolgt, mit dem beim uhrzeitabhängigen Normalbetrieb des Fahrtschreibers die analogen Geschwindigkeits- und Drehzahldiagramme aufgezeichnet werden. Das erfindungsgemässe Konzept bietet die Möglichkeit, die Motordrehzahlen zwar zu erfassen, sie auch anzuzeigen, sie jedoch nicht als analoges Drehzahldiagramm aufzuzeichnen, was im allgemeinen auch nicht zwingend erforderlich ist, da im wesentlichen die Grenzwerte interessieren. D.h. bei einem derart ausgerüsteten Fahrtschreiber kann auf eine separate Einrichtung zur Drehzahlaufzeichnung verzichtet werden, andererseits ist dieser Fahrtschreiber in der Lage, kumulierte Drehzahlwerte zu liefern, die mit dem Geschwindigkeitsschreibstift ausgegeben werden.

Wie bereits erwähnt, kann man den Datenspeicher 52 auch dazu benutzen, um sich nicht verändernde Daten zu speichern und gegebenenfalls auf die Diagrammscheibe 42 auswertbar aufzuzeichnen. Eine solche Aufzeichnung ist im Feld H zu erkennen. Hier sind digitale Daten, wie beispielsweise das Fahrzeugkennzeichen, die Fahrer-Nr., die Fahrgestell-Nr. usw. in binärer Darstellung aufgezeichnet, wobei die Bits, die zu einem Byte gehören, jeweils auf dem gleichen Radius liegen. Im Aufzeichnungsfeld I erkennt man die Balkendiagramme, die oben bereits im Zusammenhang mit Fig. 3 für die Fahrzeiten beschrieben wurden. Die Aufzeichnung konstanter Daten kann, wenn man Wert auf eine visuelle Auswertbarkeit legt, auch ziffernmässig erfolgen, sofern ein entsprechender Steuerungsaufwand im Systemspeicher 53 getrieben wird.

Es sei an dieser Stelle nochmals verdeutlicht, dass letzten Endes abhängig von dem gewählten mechanischen Aufzeichnungsverfahren die Anordnung des Schreibstiftes 24 derart, dass der Schreibstift 24 ständig auf den Diagrammscheiben aufliegt, in besonderer Weise zur Darstellung von Blockdiagrammen, wie sie die Fig. 5 zeigt, aber auch von Liniendiagrammen in Zick-Zack- oder Stufenform geeignet ist. Demgegenüber können mit dem Schreibstift 34, der durch zwei Antriebsmittel, nämlich einerseits durch den Schrittmotor $V_1$, andererseits durch den Elektromagneten $V_3$, betätigt wird, zwar andere Diagrammformen erzeugt werden als mit dem Schreibstift 24, bei geeigneter Steuerung letztlich aber auch solche, wie sie der Schreibstift 24 aufzeichnet.

Das Abrufen der Diagramme gemäss Fig. 5 kann, wie bereits oben erläutert wurde, nach Abschluss eines grösseren Transportauftrages oder am Ende einer Woche erfolgen, indem die Datendiagrammscheibe 42, die selbstverständlich dem im Fahrtschreiber realisierten Aufzeichnungsprinzip, hier dem Wachspapier-Aufzeichnungsverfahren, entsprechen muss, in den Fahrtschreiber 1 eingelegt wird und gegebenenfalls mittels eines Schlüssels der Auslösesignalgeber 7 betätigt wird. Das Auslösesignal bewirkt, dass der Schrittmotor $V_5$ mit einer schnellen Impulsfolge beaufschlagt wird, so dass die Datendiagrammscheibe 42 im Gegensatz zur uhrzeitabhängig bewegten Diagrammscheibe schneller, beispielsweise mit 1 Umdrehung/10 Min. transportiert wird.

Sollen die auf der Datendiagrammscheibe 42 aufgezeichneten Daten für übergeordnete Zwecke weiter verdichtet und ausgewertet werden, kann dies mit den bereits erwähnten, elektro-optischen Auswerteeinrichtungen erfolgen, wozu dann allerdings besondere Auswerteprogramme erforderlich sind.

Wird ein derartiger Fahrtschreiber auch für die «Letztwegerfassung» eingesetzt, so werden in dem Datenspeicher 52 die Geschwindigkeitsdaten der letzten 200 m bis 300 m Fahrweg gespeichert, wobei jeweils die neueren Daten die älteren Daten «verdrängen». Es ist auch möglich, hinsichtlich der älteren Daten eine Zusammenfassung vorzunehmen, so dass beispielsweise nur jeder 100ste Geschwindigkeitswert gespeichert wird, während bei den Werten für die «Letztwegerfassung» jeder 2. oder 3. gemessene Geschwindigkeitswert gespeichert wird. Für die Erzeugung des «Letztwegdiagramms» wird nach einem Unfall oder einer unfallähnlichen Situation, nachdem zuvor eine Datendiagrammscheibe 42 in den Fahrtschreiber eingelegt worden ist, der Auslösesignalgeber 7 betätigt. Der Schreibstift 24 zeichnet dann, wie Fig. 6 zeigt, ein ausreichend aufgelöstes Geschwindigkeits/Wegdiagramm der letzten 200 m bis 300 m auf. Die gespeicherten, den Fahrtverlauf betreffenden Daten lassen sich auf diese Weise dokumentarisch so festhalten und in Form des Diagrammträgers zu den Akten beispielsweise eines Gerichtsverfahrens nehmen.

**Patentansprüche**

1. Fahrtschreiber für Kraftfahrzeuge, in welchem das Fahrzeug und den Fahrbetrieb betreffende Daten mittels einer Aufzeichnungseinrichtung (23, 34) nicht löschbar auf einer uhrzeitabhängig angetriebenen Diagrammscheibe (42) aufgezeichnet werden und welche zum löschbaren Registrieren ausgewählter Daten mit einem Datenspeicher (52) ausgestattet ist, welchem ein die Dateneingabe steuernder Mikroprozessor (50) zugeordnet ist, dadurch gekennzeichnet, dass mit Hilfe des Mikroprozessors (50) errechnete Datensummen und/oder programmgemäss ausgewählte Ereignisdaten während eines mehrfachen des für die uhrzeitabhängig angetriebene Diagrammscheibe vorgesehenen Zeitabschnitts im Datenspeicher (52) gespeichert werden, dass der Diagrammscheibenantrieb ($V_5$) zur Registrierung der gespeicherten Daten durch dieselbe der uhrzeitabhängigen Registrierung dienende Aufzeichnungseinrichtung von der üblichen Drehzahl 1/24 h auf eine wesentlich höhere Drehzahl umschaltbar ist und dass die für die uhrzeitabhängige Registrierung übliche Diagrammscheibe ausgetauscht ist gegen eine besondere Datendiagrammscheibe (42).

2. Fahrtschreiber nach Anspruch 1, dadurch gekennzeichnet, dass die mikroprozessorgesteuerte Aufzeichnungseinrichtung (2) jeweils von einem Schrittmotor ($V_1$, $V_2$) angetriebene Schreibstifte (24 und 34) aufweist, von denen einer (24) der analogen Darstellung der Geschwindigkeitsdaten, der andere (34), indem er durch ein zusätzliches Antriebselement ($V_3$) in bezug auf die Diagrammscheibe heb- und senkbar ist, der mehrspurigen Darstellung von Zeit- und Wegdaten in Form von Balken- und Zick-Zack-Diagrammen auf einer mit einer Umdrehung/24 h transportierten Diagrammscheibe dient und dass die gleiche Aufzeichnungseinrichtung (2) auf einer besonderen, im Schnellgang mit beispielsweise einer Umdrehung/10 Min. transportierten Datendiagrammscheibe (42) einerseits mittels des Schreibstiftes (24) digital auswertbare Blockdiagramme kumulierter Geschwindigkeitsdaten (Feld E), andererseits mittels des Schreibstiftes (34) komprimierte Zeit- und Wegdaten (Feld I) darstellt.

3. Fahrtschreiber nach Anspruch 2, dadurch gekennzeichnet, dass der Schreibstift (24) sowohl kumulierte Geschwindigkeitsdaten (Feld E) als auch kumulierte Drehzahldaten (Feld D) aufzeichnet.

4. Fahrtschreiber nach Anspruch 2, dadurch gekennzeichnet, dass der Schreibstift (34) sowohl komprimierte Zeit- und Wegdaten (Feld I) als auch Konstantdaten (Feld H) bei radialer Wertdarstellung in digitaler Form aufzeichnet.

5. Fahrtschreiber nach Anspruch 1, dadurch gekennzeichnet, dass als Aufzeichnungseinrichtung ein hochauflösender Thermodruckkopf Anwendung findet.

6. Fahrtschreiber nach Anspruch 1, dadurch gekennzeichnet, dass als Aufzeichnungseinrichtung ein hochauflösender Elektrodenkamm Anwendung findet.

7. Fahrtschreiber nach Anspruch 1, dadurch gekennzeichnet, dass der Mikroprozessor (50) ausser mit einen Datenspeicher (52) in Form eines RAM mit einem Systemspeicher (53) in Form eines EPROM zusammenwirkt, dessen Inhalt teils (53') den Normalbetrieb, teils (53'') den Betrieb der Datenübergabe auf eine besondere, im Schnellgang angetriebene Datendiagrammscheibe (42) steuert.

8. Fahrtschreiber nach Anspruch 7, dadurch gekennzeichnet, dass der Systemspeicher (53) entweder das Aufzeichnen kumulierter Daten oder das Aufzeichnen der Geschwindigkeits- und Wegdaten für eine analoge «Letztwegdarstellung» steuert.

9. Fahrtschreiber nach Anspruch 7, dadurch gekennzeichnet, dass der Mikroprozessor (50) über eine Mehrzahl von Eingangsports (55) sowohl mit mehreren dynamischen Gebern ($G_1$ bis $G_3$) als auch mit mehreren statischen Gebern ($T_1$ bis $T_n$) verknüpft ist.

10. Fahrtschreiber nach Anspruch 1, dadurch gekennzeichnet, dass, abweichend vom Systemprogramm, der Mikroprozessor (50) beispielsweise aufgrund eines vom Auslösesignalgeber (7) gelieferten, in geeigneter Weise codierten Signals lediglich die Aufzeichnung der wöchentlichen Arbeitszeitdaten oder des Geschwindigkeits- oder Kraftstoffverbrauchsprofils auf die Datendiagrammscheibe (42) steuert.

**Claims**

1. Tachograph for motor vehicles in which data relating to the vehicle and its operation are undeletably recorded by a recording device (23, 24) on a time dependently driven diagram disk (42) and which for deletably recording selected data is provided with a data store (52) to which a microprocessor (50) is attributed for controlling the data input, characterized in that the results of data calculated with the aid of the microprocessor (50) and/or event data selected by the program are stored over a time sector being the multiple of the time sector of the time dependently driven record carrier (42) are retained in the data store (52) that the diagram disk drive (V₅) for recording the stored data may be switched over by the same recording device serving to the time dependent recording from the usual number of revolution of 1/24 h to an essentially higher number of revolutions and that the usual diagram disk serving to the time dependent recording is replaced by a special data diagram disk (42).

2. Tachograph according to Claim 1, characterized in that the microprocessor controlled recording device (2) has recording means (24 and 34) each driven by a step motor (V₁, V₂) one recording means (24) serving to the analog representation of the speed data whilst the other (34) may be lifted on and off the diagram disk an additional driving means (V₃) serving to represent time and distance data in several channels in the form of bar and zig-zag diagrams on a diagram disk transported for one revolution in 24 h and in that the same recording means (2) records on a special diagram disk (42) transported in a high speed drive of f.i. one revolution/10 min. on the one hand by means of the recording means (24) digitally evaluatable block diagrams of cumulated speed data (sector E) on the other hand by means of the recording means (34) compressed time and distance data (sector I).

3. Tachograph according to Claim 2, characterized in that the recording pencil (24) records cumulated speed data (sector E) as well as cumulated revolution data (sector D).

4. Tachograph according to Claim 2, characterized in that the recording means (34) records compressed time and distance data (sector I) as well as constant data (sector H) in radial value representation in digital form.

5. Tachograph according to Claim 1, characterized in that as a recording means a thermoprinter of high resolution is used.

6. Tachograph according to Claim 1, characterized in that as a recording device a comb of electrodes of high resolution is used.

7. Tachograph according to Claim 1, characterized in that the microprocessor (50) apart from the data store (52) in the form of a RAM cooperates with a system store (53) in the form of an EPROM, the contents of which (53') relates partially to the normal operation, partly (53'') to the operation of the data transfer to a diagram disk (42) driven at high speed.

8. Tachograph according to Claim 7, characterized in that the system store (53) either controls the recording of cumulated data or the recording of speed and distance data for an analog representation of the last distance.

9. Tachograph according to Claim 7, characterized in that the microprocessor (50) is connected by means of a plurality of input ports (55) with dynamic data generators (G₁ to G₃) as well as with several static generators (T₁ to Tₙ).

10. Tachograph according to Claim 1, characterized in that deviating from the system program the microprocessor (50) controls for instance by means of a releasing signal (7) in suitable manner only the recording of coded signals relating to the recording of weekly working times or of speed or fuel consumption data on the diagram disk (42).

**Revendications**

1. Enregistreur de route pour véhicules automobiles dans lequel des données concernant le véhicule et le fonctionnement du véhicule sont enregistrées, de façon non effaçable, à l'aide d'un dispositif d'enregistrement (23, 24), sur un disque de diagramme (42) entraîné en fonction du temps réel, et qui, pour l'enregistrement effaçable de données sélectionnées, est équipé d'une mémoire de données (52) à laquelle est associé un microprocesseur (50) commandant l'entrée de données, caractérisé par le fait que des sommes de données calculées à l'aide du microprocesseur (50) et/ou des données d'événements sélectionnées sont mémorisées dans la mémoire de données (52) pendant un multiple de l'intervalle de temps prévu pour le disque de diagramme entraîné en fonction du temps réel, que l'entraînement du disque de diagramme (V₅) pour l'enregistrement des données ménorisées peut être commuté, par ce même dispositif d'enregistrement servant à l'enregistrement en fonction du temps réel de la vitesse de rotation habituelle de 1 tour/24 h à une vitesse de rotation beaucoup plus élevée et que le disque de diagramme habituellement utilisé pour l'enregistrement en fonction du temps réel est remplacé par un disque de diagramme de données (42) spécial.

2. Enregistreur de route selon la revendication 1, caractérisé par le fait que le dispositif d'enregistrement (2) commandé par microprocesseur présente des stylets scripteurs (24 et 34) entraînés chacun par un moteur pas à pas (V₁, V₂) et dont l'un (24) sert à la représentation analogique des données de vitesse et l'autre (34), en pouvant être rehaussé et abaissé par rapport au disque de diagramme par un élément d'entraînement supplémentaire (V₃), à la représentation, en plusieurs pistes, de données de temps et de distance parcourues sous forme de diagrammes de barre et de diagrammes en zigzag sur un disque de diagramme transporté à la vitesse de 1 tour/24 h et que le même dispositif d'enregistrement (2) représente sur un disque de diagramme de données spécial (42) transporté à la vitesse de, par exemple, un tour/10 minutes représente, d'une part, au moyen du stylet scripteur (24), des diagrammes de barre numériquement exploitables de données de vitesse cumulées (zone E), d'autre part, au moyen du stylet scripteur (34), des données comprimées de temps et de distances parcoures (zone I).

3. Enregistreur de route selon la revendication 2, caractérisé par le fait que le stylet scripteur (24) enregistre aussi bien des données de vitesse cumulées (zone E) que des données de vitesse de rotation cumulées (zone D).

4. Enregistreur de route selon la revendication 2, caractérisé par le fait que le stylet scripteur (34) enregistre aussi bien des données comprimées de temps et de distances parcourues (zone I) que des données constantes (zone H) avec une représentation radiale des valeurs sous forme numérique.

5. Enregistreur de route selon la revendication 1, caractérisé par le fait que le dispositif denregistrement utilisé est une tête d'impression à haute résolution.

6. Enregistreur de route selon la revendication 1, caractérisé par le fait que le dispositif d'enregistrement utilisé est une peigne porte-électrodes à haute résolution.

7. Enregistreur de route selon la revendication 1, caractérisé par le fait que le microprocesseur (50) coopère, d'une part, avec une mémoire de données (52) sous forme d'une RAM et, d'autre part, avec une mémoire de système (53) sous forme d'une EPROM dont le contenu commande en partie (53') le fonctionnement normal, en partie (53'') le fonctionnement du transfert de données à un disque de diagramme de données (42) spécial entraîné à grande vitesse.

8. Enregistreur de route selon la revendication 7, caractérisé par le fait que la mémoire de système (53) commande soit l'enregistrement de données cumulées sout l'enregistrement de données de vitesse et de distances parcourues pour une «représentation de dernier parcours» analogique.

9. Enregistreur de route selon la revendication 7, caractérisé par le fait que le microprocesseur (50) est associé, par un grand nombre de ports d'entrée (55) aussi bien à plusieurs capteurs dynamiques ($G_1$ à $G_3$), qu'à plusieurs capteurs statiques ($T_1$ à $T_n$).

10. Enregistreur de route selon la revendication 1, caractérisé par le fait que, en s'écartant du programme de système, le microprocesseur (50) commande, par exemple, en raison d'un signal codé d'une manière appropriée, fourni par un générateur de signaux de déclenchement (7), seulement l'enregistrement soit des données de temps de travail hebdomadaires soit du profil de vitesse ou de consommation de carburant sur le disque de diagramme de données (42).

FIG. 1

FIG. 2

FIG. 3

FIG. 4

FIG. 5

FIG. 6